# EUROPEAN PATENT APPLICATION

(11) **EP 4 796 994 A1**
(43) Date of publication of application: **26.08.2026**
(21) Application number: 25194731.3
(22) Date of filing: 08.08.2025
(51) Int. Cl.: G02F 1/313, G02F 1/21, G02F 1/225, G02F 1/01

(54) **OPTICAL SWITCHES INCLUDING MULTIPLE RING RESONATORS**

(30) Priority: 21.02.2025 US 202519059429
(71) Applicant: GlobalFoundries U.S. Inc., Malta, NY 12020 (US)
(72) Inventor: Dash, Aneesh, 560045 Bangalore (IN)
(74) Representative: Grünecker Patent- und Rechtsanwälte PartG mbB

(57) **Abstract**

Structures for an optical switch and methods of forming such structures. The structure comprises a Mach-Zehnder interferometer including a first arm, a second arm, a first waveguide core section coupled to the first arm, and a second waveguide core section coupled to the second arm. The structure further comprises a first ring resonator and a second ring resonator. The first ring resonator is positioned between the first waveguide core section and the second ring resonator, and the second ring resonator is positioned between the second waveguide core section and the first ring resonator.

## Description

### BACKGROUND

This disclosure relates to photonic chips and, more specifically, to structures for an optical switch and methods of forming such structures.

Photonic chips are used in many applications and systems including, but not limited to, data communication systems and data computation systems. A photonic chip includes a photonic integrated circuit comprised of photonic components, such as modulators, polarizers, and couplers, that are used to manipulate light received from a light source, such as an optical fiber or a laser.

An optical switch is a common photonic component that may be found in a photonic integrated circuit. A Mach-Zehnder interferometer can be used as a base device for an optical switch. An optical coupler splits input light between a pair of arms of the Mach-Zehnder interferometer. A phase difference may be introduced between the light propagating in the different arms to provide a pair of different switched conditions. The arms converge at a downstream optical coupler at which the light is combined. In one switched condition, the phase difference between the light after propagating through the arms is an odd multiple of pi, and the combined light exits from an output port of the output coupler. In the other switched condition, the phase difference between the light after propagating through the arms is an even multiple of pi, and the combined light exits from a different output port of the output coupler.

Conventional optical switches based on a Mach-Zehnder interferometer may be characterized by a high insertion loss that is unacceptable in certain applications or systems. Conventional optical switches based on a Mach-Zehnder interferometer may also suffer from a low extinction ratio and an excessively-large footprint.

Improved structures for an optical switch and methods of forming such structures are needed.

### SUMMARY

In an embodiment of the invention, a structure for an optical switch is provided. The structure comprises a Mach-Zehnder interferometer including a first arm, a second arm, a first waveguide core section coupled to the first arm, and a second waveguide core section coupled to the second arm. The structure further comprises a first ring resonator and a second ring resonator. The first ring resonator is positioned between the first waveguide core section and the second ring resonator, and the second ring resonator is positioned between the second waveguide core section and the first ring resonator.

In an embodiment of the invention, a method of forming a structure for an optical switch is provided. The method comprises forming a Mach-Zehnder interferometer including a first arm, a second arm, a first waveguide core section coupled to the first arm, and a second waveguide core section coupled to the second arm. The structure further comprises forming a first ring resonator and forming a second ring resonator. The first ring resonator is positioned between the first waveguide core section and the second ring resonator, and the second ring resonator is positioned between the second waveguide core section and the first ring resonator.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure at an initial fabrication stage of a processing method in accordance with embodiments of the invention.
FIG. 2 is a cross-sectional view taken generally along line 2-2 in FIG. 1.
FIG. 2A is a cross-sectional view taken generally along line 2A-2A in FIG. 1.
FIGS. 3, 3A are cross-sectional views of the structure at a fabrication stage of the processing method subsequent to FIGS. 1, 2, 2A.
FIG. 4 is a top view of a structure in accordance with alternative embodiments of the invention.
FIG. 5 is a diagrammatic view of a structure in accordance with embodiments of the invention.

### DETAILED DESCRIPTION

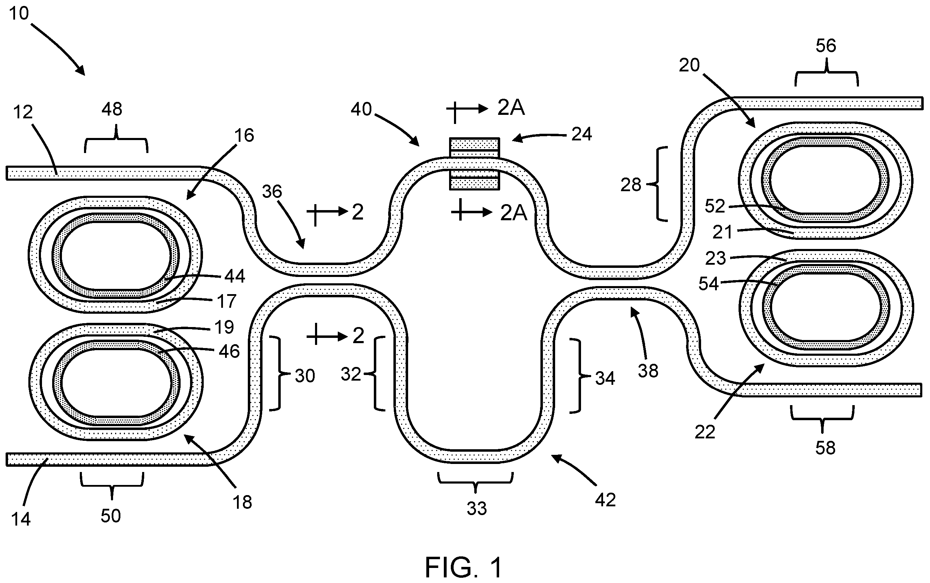

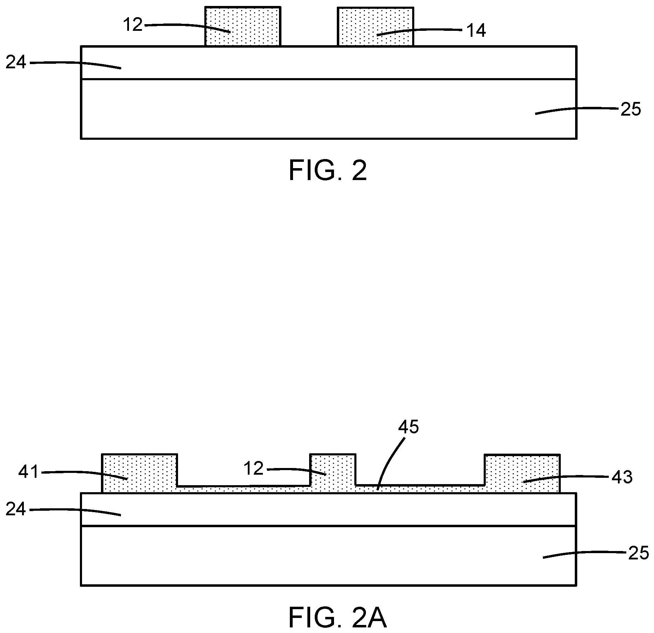

With reference to FIGS. 1, 2, 2A and in accordance with embodiments of the invention, a structure 10 for an optical switch includes a waveguide core 12, a waveguide core 14, and a phase shifter 24 that form a Mach-Zehnder interferometer, as well as a ring resonator 16, a ring resonator 18 that is cascaded with the ring resonator 16, a ring resonator 20, and a ring resonator 22 that is cascaded with the ring resonator 20. The waveguide cores 12, 14, the phase shifter 24, and the ring resonators 16, 18, 20, 22 are positioned on, and overlie, a dielectric layer 25 and a semiconductor substrate 26. In an embodiment, the dielectric layer 25 may be comprised of a dielectric material, such as an oxide (e.g., silicon dioxide), and the semiconductor substrate 26may be comprised of a semiconductor material, such as single-crystal silicon. In an embodiment, the dielectric layer 25 may be a buried oxide layer of a silicon-on-insulator substrate. The dielectric layer 25 may provide low-index cladding that optically isolates the waveguide cores 12, 14, the ring resonators 16, 18, 20, 22, and the phase shifter 24 from the semiconductor substrate 26.

The waveguide core 12 is paired with the waveguide core 14 to structurally form a Mach-Zehnder interferometer. The waveguide cores 12, 14 are routed to include adjacent sections that represent a directional coupler 36 of the Mach-Zehnder interferometer and adjacent sections that represent a directional coupler 38 of the Mach-Zehnder interferometer. The waveguide core 12 includes an arm 40 of the Mach-Zehnder interferometer that is arranged between the directional couplers 36, 38, and the waveguide core 14 includes an arm 42 of the Mach-Zehnder interferometer that is arranged between the directional couplers 36, 38. The Mach-Zehnder interferometer further includes a section 28 of the waveguide core 12 that is coupled to the section of the waveguide core 12 participating in the directional coupler 38. The Mach-Zehnder interferometer further includes a section 30 of the waveguide core 14 that is coupled to the section of the waveguide core 14 participating in the directional coupler 36, a section 32 of the waveguide core 14 that is included in the arm 42, and a section 34 of the waveguide core 14 that is included in the arm 42.

The arm 40 is coupled to the section of the waveguide core 12 participating in the directional coupler 36 and is also coupled to the section of the waveguide core 12 participating in the directional coupler 38. The arm 42 is coupled to the section of the waveguide core 14 participating in the directional coupler 36 and is also coupled to the section of the waveguide core 14 participating in the directional coupler 38. The arms 40, 42 are arranged along the length of the waveguide cores 12, 14 between the directional coupler 36 and the directional coupler 38. The directional coupler 36 has a coupling length over which the participating sections of the waveguide cores 12, 14 have a spacing that permits light coupling. Similarly, the directional coupler 38 has a coupling length over which the participating sections of the waveguide cores 12, 14 have a spacing that permits light coupling. In an alternative embodiment, the directional couplers 36, 38 may be replaced by a different type of optical coupler, such as a multi-mode interference coupler.

The section 28 of the waveguide core 12 is coupled by a bend to the section of the waveguide core 12 participating in the directional coupler 38. The section 30 of the waveguide core 14 is coupled by a bend to the section of the waveguide core 14 participating in the directional coupler 36, the section 32 included in the arm 42 of the waveguide core 14 is coupled by a bend to the section of the waveguide core 14 participating in the directional coupler 36, and the section of the waveguide core 14 participating in the directional coupler 36 is arranged along the length of the waveguide core 14 between the section 30 and the section 32. The section 32 included in the arm 42 of the waveguide core 14 is coupled by a section 33 of the arm 42 to the section 34 included in the arm 42 of the waveguide core 14. The section 34 included in the arm 42 of the waveguide core 14 is coupled by a bend to the section of the waveguide core 14 participating in the directional coupler 38.

The section 28 of the waveguide core 12 has a length that is a portion of the total length of the waveguide core 12 along the direction of light propagation in the waveguide core 12. The section 30 of the waveguide core 14, the section 32 of the waveguide core 14, and section 34 of the waveguide core 14 have respective lengths that are individual portions of the total length of the waveguide core 14 along the direction of light propagation in the waveguide core 14. In an embodiment, the lengths of the sections 30, 32, 34 may be equal. In an embodiment, the section 28 may have a length, and the lengths of the sections 30, 32, 34 may be equal to the length of the section 28. In an embodiment, the length of the section 28 and the length of each of the sections 30, 32, 34 may be effective to introduce a phase shift of one-half pi (i.e., π/2), and the difference between the optical path length in the waveguide core 14 and the optical path length in waveguide core 12 may be equal to pi (i.e., π).

The phase shifter 24 is coupled to a section of the arm 40 included in the waveguide core 12 that is arranged along the length of the waveguide core 12 between the directional coupler 36 and the directional coupler 38. In an embodiment, the phase shifter 24 may be a thermo-optic phase shifter that includes resistive heating elements 41, 43 that are disposed on opposite sides of the section of the arm 40 of the waveguide core 12 and that are coupled to the section of the arm 40 of the waveguide core 12 by a slab layer 45. The resistive heating elements 41, 43 of the phase shifter 24 may be configured to generate heat by Joule heating under the control of a variable electrical signal, and the generated heat may be transferred by thermal conduction in the slab layer 45 from the resistive heating elements 41, 43 to the coupled section of the arm 40 of the waveguide core 12. The temperature of the coupled section of the waveguide core 12 is locally elevated by the transferred heat. The localized temperature variation experienced by the coupled section of the arm 40 of the waveguide core 12 is effective to change the refractive index of its constituent material through the thermo-optic effect and to thereby alter the phase of light propagating in the coupled section of the arm 40 of the waveguide core 12. In an embodiment, the phase shifter 24 may be operated to provide a phase shift equal to zero (i.e., 0) or an integer multiple of pi, or a phase shift equal to one-half pi (i.e., π/2) or half-integer multiple of pi. The phase shift generated by the phase shifter 24 may offset the phase shift introduced by the sections 28, 30, 32, 34 to provide a total phase shift modulated between an integer multiple of pi or a half-integer multiple of pi. In alternative embodiments, the phase shifter 24 may be replaced by an electro-optic phase shifter, a lithium niobate-based phase shifter, a barium titanate-based phase shifter, a polymer-based phase shifter, a two-dimensional material-based phase shifter, or a microelectromechanical system-based phase shifter.

The ring resonator 16 includes a waveguide core 17 having a closed shape and a heater 44 arranged inside an inner perimeter of the waveguide core 17. The ring resonator 18 includes a waveguide core 19 having a closed shape and a heater 46 arranged inside an inner perimeter of the waveguide core 19. The Mach-Zehnder interferometer includes a section 48 of the waveguide core 12 that is coupled to the section of the waveguide core 12 participating in the directional coupler 36. The Mach-Zehnder interferometer includes a section 50 of the waveguide core 14 is coupled to the section of the waveguide core 14 participating in the directional coupler 36. The ring resonators 16, 18 are laterally arranged between the section 48 of the waveguide core 12 and the section 50 of the waveguide core 14. The heater 44 is configured to provide heat to the waveguide core 17 for resonance tuning of the ring resonator 16, and the heater 46 is configured to provide heat to the waveguide core 19 for resonance tuning of the ring resonator 18.

The ring resonator 20 includes a waveguide core 21 having a closed shape and a heater 52 arranged inside an inner perimeter of the waveguide core 21. The ring resonator 22 includes a waveguide core 23 having a closed shape and a heater 54 arranged inside an inner perimeter of the waveguide core 23. The Mach-Zehnder interferometer includes a section 56 of the waveguide core 12 that is coupled to the section of the waveguide core 12 participating in the directional coupler 38. The Mach-Zehnder interferometer includes a section 58 of the waveguide core 14 that is coupled to the section of the waveguide core 14 participating in the directional coupler 38. The ring resonators 20, 22 are laterally arranged between the section 56 of the waveguide core 12 and the section 58 of the waveguide core 14. The heater 52 is configured to provide heat to the waveguide core 21 for resonance tuning of the ring resonator 20, and the heater 54 is configured to provide heat to the waveguide core 23 for resonance tuning of the ring resonator 22.

The sections 48, 50 of the waveguide cores 12, 14 and the sections 56, 58 of the waveguide cores 12, 14 may be coupled to other photonic components of the photonic integrated circuit. In an embodiment, the sections 48, 50 of the waveguide cores 12, 14 may be configured as input ports that receive light from upstream photonic components, and the sections 56, 58 of the waveguide cores 12, 14 may be configured as output ports that output light to downstream photonic components. In an alternative embodiment, the sections 56, 58 of the waveguide cores 12, 14 may be configured as input ports to the structure 10, and the sections 48, 50 of the waveguide cores 12, 14 may be configured as output ports from the structure 10. Light received via the input ports may be modulated and output as modulated light from the output ports of the structure 10 to be guided to downstream photonic components.

In an embodiment, the waveguide cores 12, 14 and the waveguide cores 17, 19, 21, 23 may be comprised of a material having a refractive index that is greater than the refractive index of silicon dioxide. In an embodiment, the waveguide cores 12, 14 and the waveguide cores 17, 19, 21, 23 may be comprised of a semiconductor material, such as single-crystal silicon, amorphous silicon, or polysilicon. In an alternative embodiment, the waveguide cores 12, 14 and the waveguide cores 17, 19, 21, 23 may be comprised of a dielectric material, such as silicon nitride, silicon oxynitride, or aluminum nitride. In alternative embodiments, other materials, such as a III-V compound semiconductor, may be used to form the waveguide cores 12, 14 and the waveguide cores 17, 19, 21, 23.

In an embodiment, the waveguide cores 12, 14 and the waveguide cores 17, 19, 21, 23 may be formed by patterning a layer comprised of its constituent material with lithography and etching processes. In an embodiment, an etch mask may be formed by a lithography process over the layer, and unmasked sections of the layer may be etched and removed with an etching process. In an embodiment, the waveguide cores 12, 14 and the waveguide cores 17, 19, 21, 23 may be formed by patterning the single-crystal silicon of the device layer of a silicon-on-insulator substrate. In an embodiment, the waveguide cores 12, 14 and the waveguide cores 17, 19, 21, 23 may be formed by patterning a deposited layer comprised of their constituent material.

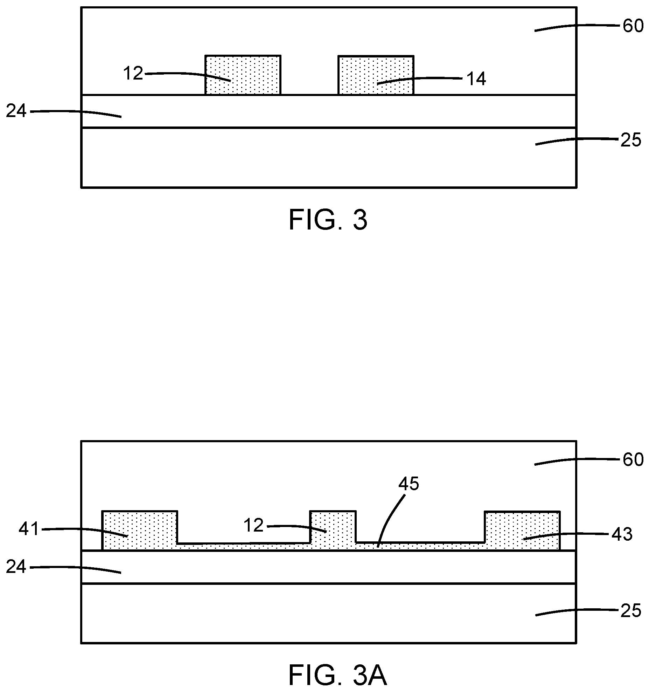

With reference to FIGS. 3, 3A in which like reference numerals refer to like features in FIGS. 1, 2, 2A and at a subsequent fabrication stage, a back-end-of-line stack 60 may be formed that overlies the waveguide cores 12, 14 and the ring resonators 16, 18, 20, 22. The back-end-of-line stack 60 may include a stack of dielectric layers in which each dielectric layer is comprised of a dielectric material, such as an oxide of silicon (e.g., silicon dioxide), a nitride of silicon (e.g., silicon nitride), tetraethylorthosilicate silicon dioxide, or fluorinated-tetraethylorthosilicate silicon dioxide.

The ring resonators 16, 18 are cascaded with optical paths that are coupled to the directional coupler 36 of the Mach-Zehnder interferometer and may be arranged proximate to the sections 48, 50 of the Mach-Zehnder interferometer. The ring resonators 20, 22 are also cascaded with optical paths that are coupled to the directional coupler 38 of the Mach-Zehnder interferometer and, in an alternative embodiment, may be arranged proximate to the sections 56, 58 of the Mach-Zehnder interferometer. In an embodiment, the sections 48, 50 may represent input ports to the Mach-Zehnder interferometer, and the sections 56, 58 may represent output ports from the Mach-Zehnder interferometer. In an embodiment, the section 30 in the optical path introduces a one-half pi (π/2) phase difference in the light entering the directional coupler 36 through the waveguide core 14. In the arm 42 of the Mach-Zehnder interferometer, an additional pi (π) phase difference is introduced by the section 32 and the section 34. In an embodiment, the section 30 in the optical path introduces a one-half pi (π/2) phase difference in the light entering the directional coupler 36. In an embodiment, the section 28 in the optical path introduces a one-half pi (π/2) phase difference in the light exiting the directional coupler 38 through the waveguide core 12.

The structure 10 represents a broadband optical switch that may be characterized by no free spectral range. The optical switch embodied in the structure 10 may be characterized by a lower optical switching power than conventional optical switches based on a Mach-Zehnder interferometer. The optical switch embodied in the structure 10 may be characterized by a compact footprint that is smaller than the footprint of conventional optical switches and may operate at a lower power than conventional optical switches. Parameters of the ring resonators 16, 18 and parameters of the ring resonators 20, 22 may be optimized to enable the optical switch embodied in the structure 10 to operate with both minimum insertion loss and high crosstalk rejection.

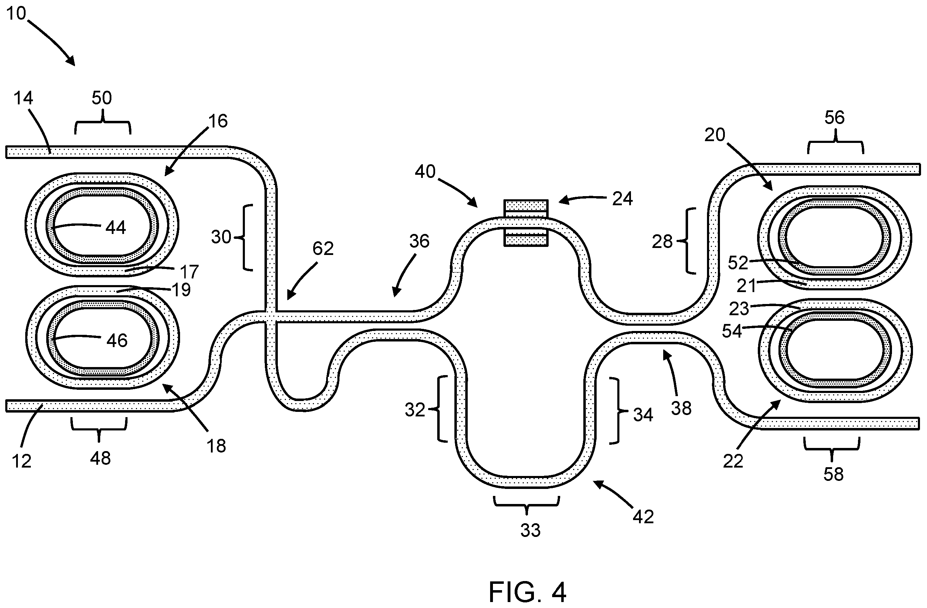

With reference to FIG. 4 in which like reference numerals refer to like features in FIG. 1 and in accordance with alternative embodiments, the Mach-Zehnder interferometer may include a waveguide core crossing 62 at which the waveguide core 12 and the waveguide core 14 intersect. The section 30 and the section 50 are coupled by the waveguide core crossing 62 to the directional coupler 36 and the arm 42. The section 48 is coupled by the waveguide core crossing 62 to the directional coupler 36 and the arm 40. Light entering at the input port represented by the section 50 receives a phase delay introduced by the section 30, crosses the waveguide core 12 at the waveguide core crossing 62, and is routed by a series of bends to the section of the waveguide core 14 participating in the directional coupler 36.

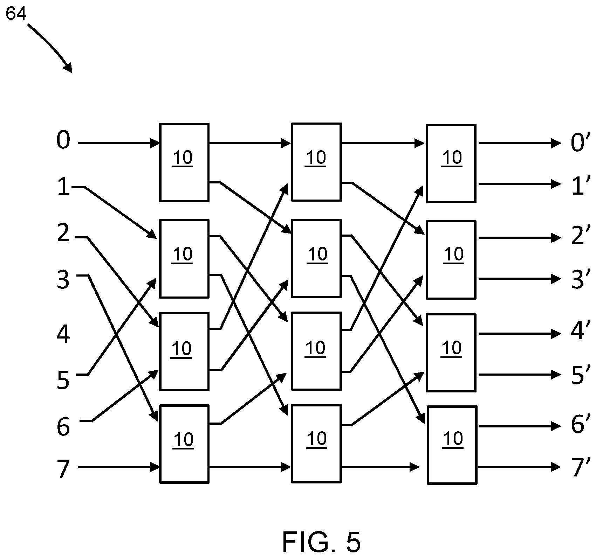

With reference to FIG. 5 and in accordance with alternative embodiments, instances of the structure 10 may aggregates to form an optical circuit 64 used for switching application. For example, the instances of the structure 10 may be used to switch optical paths between inputs 0-7 and outputs 0'-7'. Representative optical path switching between inputs 0-7 and outputs 0'-7' is illustrated by the single-headed arrows.

The instances of the structure 10 provide broadband low-loss and low crosstalk optical switching units that can be used to build a switch matrix represented by the optical circuit 64. In an alternative embodiment, instances of the structure 10 may be used to construct a switch matrix having a different architecture from the optical circuit 64.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a direction or a plane parallel to a conventional plane of a semiconductor substrate, regardless of its actual three-dimensional spatial orientation. The terms "vertical" and "normal" refer to a direction or plane in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or "directly contacting" another feature if intervening features are absent. A feature may be "indirectly on" or in "indirect contact" with another feature if at least one intervening feature is present. A feature may "overlie" another feature if a feature is positioned over another feature. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

In summary, structures for an optical switch and methods of forming such structures are disclosed. The structure comprises a Mach-Zehnder interferometer including a first arm, a second arm, a first waveguide core section coupled to the first arm, and a second waveguide core section coupled to the second arm. The structure further comprises a first ring resonator and a second ring resonator. The first ring resonator is positioned between the first waveguide core section and the second ring resonator, and the second ring resonator is positioned between the second waveguide core section and the first ring resonator.
The following embodiments are explicitly disclosed.

### Embodiment 1:

A structure for an optical switch, the structure comprising:
a Mach-Zehnder interferometer including a first arm, a second arm, a first waveguide core section coupled to the first arm, and a second waveguide core section coupled to the second arm;
a first ring resonator; and
a second ring resonator,
wherein the first ring resonator is positioned between the first waveguide core section and the second ring resonator, and the second ring resonator is positioned between the second waveguide core section and the first ring resonator.

### Embodiment 2:

The structure of embodiment 1, wherein the Mach-Zehnder interferometer includes a first optical coupler, the first waveguide core section is coupled to the first arm by the first optical coupler, and the second waveguide core section is coupled to the second arm by the first optical coupler.

### Embodiment 3:

The structure of embodiment 2, wherein the Mach-Zehnder interferometer includes a third waveguide core section in the first arm and a fourth waveguide core section in the first arm, the third waveguide core section is configured to produce a first one-half pi phase delay, and the fourth waveguide core section is configured to produce a second one-half pi phase delay.

### Embodiment 4:

The structure of embodiment 3, wherein the Mach-Zehnder interferometer includes a fifth waveguide core section between the first waveguide core section and the first optical coupler, and the fifth waveguide core section is configured to produce a third one-half pi phase delay.

### Embodiment 5:

The structure of one of embodiments 2 to 4 wherein the first optical coupler is a first directional coupler.

### Embodiment 6:

The structure of one of embodiments 2 to 5, wherein the Mach-Zehnder interferometer includes a second optical coupler, the first arm is coupled to the second optical coupler, the second arm is coupled to the second optical coupler, and the first arm and the second arm extend from the first optical coupler to the second optical coupler.

### Embodiment 7:

The structure of embodiment 6, wherein the Mach-Zehnder interferometer includes a third waveguide core section coupled by the second optical coupler to the first arm and a fourth waveguide core section coupled by the second optical coupler to the second arm.

### Embodiment 8:

The structure of embodiment 7, further comprising:
a third ring resonator; and
a fourth ring resonator,
wherein the third ring resonator is positioned between the third waveguide core section and the fourth ring resonator, and the fourth ring resonator is positioned between the fourth waveguide core section and the third ring resonator.

### Embodiment 9:

The structure of one of embodiments 6 to 8, wherein the second optical coupler is a second directional coupler.

### Embodiment 10:

The structure of one of embodiments 2 to 9, wherein the first optical coupler is positioned between the first arm and the first waveguide core section, and the first optical coupler is positioned between the first arm and the second waveguide core section.

### Embodiment 11:

The structure of one of embodiments 2 to 10, wherein the first waveguide core section and the second waveguide core section are configured to input light into the Mach-Zehnder interferometer.

### Embodiment 12:

The structure of one of embodiments 1 to 11, wherein the Mach-Zehnder interferometer includes a third waveguide core section in the first arm and a fourth waveguide core section in the first arm, the third waveguide core section is configured to produce a first one-half pi phase delay, and the fourth waveguide core section is configured to produce a second one-half pi phase delay.

### Embodiment 13:

The structure of embodiment 12 wherein the Mach-Zehnder interferometer includes an optical coupler and a fifth waveguide core section between the first waveguide core section and the optical coupler, the first waveguide core section is coupled to the first arm by the optical coupler, the second waveguide core section is coupled to the second arm by the optical coupler, and the fifth waveguide core section is configured to produce a third one-half pi phase delay.

### Embodiment 14:

The structure of embodiment 13 further comprising:
a phase shifter coupled to the second arm.

### Embodiment 15:

The structure of one of embodiments 1 to 14, further comprising:
a phase shifter coupled to the second arm.

### Embodiment 16:

The structure of embodiment 15, wherein the phase shifter includes a resistive heating element.

### Embodiment 17:

The structure of one of embodiments 1 to 16, wherein the Mach-Zehnder interferometer includes a waveguide core crossing, and the first waveguide core section is coupled to the first arm by the waveguide core crossing.

### Embodiment 18:

The structure of embodiment 17, wherein the second waveguide core section is coupled to the second arm by the waveguide core crossing.

### Embodiment 19:

The structure of one of embodiments 1 to 18, wherein the first arm, the second arm, the first waveguide core section, and the second waveguide core section comprise single-crystal silicon.

### Embodiment 20:

A method of forming a structure for an optical switch, the method comprising:
forming a Mach-Zehnder interferometer including a first arm, a second arm, a first waveguide core section coupled to the first arm, and a second waveguide core section coupled to the second arm;
forming a first ring resonator; and
forming a second ring resonator,
wherein the first ring resonator is positioned between the first waveguide core section and the second ring resonator, and the second ring resonator is positioned between the second waveguide core section and the first ring resonator.

### Embodiment 21:

The method of embodiment 20, wherein the structure of one of embodiments 1 to 19 is formed.

## Claims

1. A structure for an optical switch, the structure, comprising:
a Mach-Zehnder interferometer including a first arm, a second arm, a first waveguide core section coupled to the first arm, and a second waveguide core section coupled to the second arm;
a first ring resonator; and
a second ring resonator,
wherein the first ring resonator is positioned between the first waveguide core section and the second ring resonator, and the second ring resonator is positioned between the second waveguide core section and the first ring resonator.

2. The structure of claim 1, wherein the Mach-Zehnder interferometer includes a first optical coupler, the first waveguide core section is coupled to the first arm by the first optical coupler, and the second waveguide core section is coupled to the second arm by the first optical coupler.

3. The structure of claim 2, wherein the Mach-Zehnder interferometer includes a third waveguide core section in the first arm and a fourth waveguide core section in the first arm, the third waveguide core section is configured to produce a first one-half pi phase delay, and the fourth waveguide core section is configured to produce a second one-half pi phase delay.

4. The structure of claim 3, wherein the Mach-Zehnder interferometer includes a fifth waveguide core section between the first waveguide core section and the first optical coupler, and the fifth waveguide core section is configured to produce a third one-half pi phase delay.

5. The structure of one of claims 2 to 4, wherein the first optical coupler is a first directional coupler, and/or
wherein the first optical coupler is positioned between the first arm and the first waveguide core section, and the first optical coupler is positioned between the first arm and the second waveguide core section, and/or
wherein the first waveguide core section and the second waveguide core section are configured to input light into the Mach-Zehnder interferometer

6. The structure of one of claims 2 to 5, wherein the Mach-Zehnder interferometer includes a second optical coupler, the first arm is coupled to the second optical coupler, the second arm is coupled to the second optical coupler, and the first arm and the second arm extend from the first optical coupler to the second optical coupler.

7. The structure of claim 6, wherein the Mach-Zehnder interferometer includes a third waveguide core section coupled by the second optical coupler to the first arm and a fourth waveguide core section coupled by the second optical coupler to the second arm,
wherein the structure preferably further comprises:
a third ring resonator; and
a fourth ring resonator, wherein the third ring resonator is positioned between the third waveguide core section and the fourth ring resonator, and the fourth ring resonator is positioned between the fourth waveguide core section and the third ring resonator.

8. The structure of claim 6 or 7, wherein the second optical coupler is a second directional coupler.

9. The structure of one of claims 1 to 8, wherein the Mach-Zehnder interferometer includes a third waveguide core section in the first arm and a fourth waveguide core section in the first arm, the third waveguide core section is configured to produce a first one-half pi phase delay, and the fourth waveguide core section is configured to produce a second one-half pi phase delay.

10. The structure of claim 9, wherein the Mach-Zehnder interferometer includes an optical coupler and a fifth waveguide core section between the first waveguide core section and the optical coupler, the first waveguide core section is coupled to the first arm by the optical coupler, the second waveguide core section is coupled to the second arm by the optical coupler, and the fifth waveguide core section is configured to produce a third one-half pi phase delay.

11. The structure of one of claims 1 to 10, further comprising:
a phase shifter coupled to the second arm.

12. The structure of claim 11, wherein the phase shifter includes a resistive heating element.

13. The structure of one of claims 1 to 12, wherein the Mach-Zehnder interferometer includes a waveguide core crossing, and the first waveguide core section is coupled to the first arm by the waveguide core crossing,
wherein the second waveguide core section is preferably coupled to the second arm by the waveguide core crossing.

14. The structure of one of claims 1 to 13, wherein the first arm, the second arm, the first waveguide core section, and the second waveguide core section comprise single-crystal silicon.

15. A method of forming a structure for an optical switch, the method comprising:
forming a Mach-Zehnder interferometer including a first arm, a second arm, a first waveguide core section coupled to the first arm, and a second waveguide core section coupled to the second arm;
forming a first ring resonator; and
forming a second ring resonator,
wherein the first ring resonator is positioned between the first waveguide core section and the second ring resonator, and the second ring resonator is positioned between the second waveguide core section and the first ring resonator.
